# EUROPEAN PATENT SPECIFICATION

(11) **EP 4 197 376 B1**
(45) Date of publication and mention of the grant of the patent: **10.06.2026**
(21) Application number: 21855320.4
(22) Date of filing: 15.07.2021
(51) Int. Cl.: A24F 40/46, A24F 40/70, B32B 18/00, C04B 38/06, C04B 41/00, C04B 41/51, C04B 41/88, H05B 3/04, H05B 3/42, B28B 1/00, B28B 11/24, B28B 19/00, B28B 21/48, A24F 40/10

(54) **ATOMIZATION CORE, ELECTRONIC ATOMIZATION DEVICE, AND METHOD FOR MANUFACTURING THE SAME**
ATOMISIERUNGSKERN, ELEKTRONISCHES ATOMISIERUNGSGERÄT UND VERFAHREN ZU DESSEN HERSTELLUNG
NOYAU D'ATOMISATION, DISPOSITIF D'ATOMISATION ÉLECTRONIQUE ET PROCÉDÉ DE FABRICATION DE CELUI-CI

(30) Priority: 11.08.2020 CN 202010803551
(43) Date of publication of application: 21.06.2023
(73) Proprietor: Shenzhen Smoore Technology Limited, Shenzhen, Guangdong 518102 (CN)
(72) Inventor: ZHOU, Hongming, Shenzhen, Guangdong 518102 (CN); LIU, Wangsheng, Shenzhen, Guangdong 518102 (CN); CHEN, Feng, Shenzhen, Guangdong 518102 (CN); LIAO, Xiaofeng, Shenzhen, Guangdong 518102 (CN)
(74) Representative: Herrero & Asociados, S.L.
(86) International application number: PCT/CN2021/106595
(87) International publication number: WO 2022/033267

(56) References cited:
- EP-A1- 3 563 701
- WO-A1-2017/156694
- CN-A- 105 310 114
- CN-A- 105 394 816
- CN-A- 109 105 958
- CN-A- 109 984 387
- CN-A- 109 984 387
- CN-U- 211 048 390
- KR-U- 20200 000 294
- US-A1- 2015 359 262
- US-A1- 2019 274 357

## Description

### TECHNICAL FIELD

The present disclosure relates to the field of electronic atomizers, and in particular, to an atomization core, and an electronic atomization device, and a method for manufacturing the atomization core.

### BACKGROUND

Currently, a ceramic atomization core in an electronic atomization device adopts a structure configuration of an integrated liquid guiding and a heating element. A main type of the heating element generally includes a heating wire and a heating film. A ceramic atomization core product of the heating wire can achieve effects of a short air passage, a simple structure, and high atomization efficiency. However, most of the heating wires of the product are located inside a ceramic substrate, and only a few or none of the heating wires are exposed, thereby greatly reducing thermal efficiency of the product. A ceramic atomization core product of the heating film can achieve effects of surface atomization and high thermal efficiency. However, the air passage of the ceramic atomization core product of the heating film generally has turns and is relatively long, thereby greatly reducing a hot feeling of a user when smoking aerosols, resulting in low vapor generating efficiency. However, the ceramic atomization core product generally cannot achieve both advantages, resulting in failing to completely meet users' requirements on content and taste of aerosols. On the other hand, many existing atomization core products require high-temperature sintering (a sintering temperature is higher than 1100 degrees Celsius) in a protective atmosphere, and some products may be even sintered under the high temperature repeatedly, resulting in a complex process and high production costs.

CN109984387A discloses a method of preparing an atomizing assembly including a porous body and a heating element, including: preparing a first ceramic slurry and a second ceramic slurry, wherein a mass percentage of the pore former in the first ceramic slurry is greater than a mass percentage of the pore former in the second ceramic slurry; the first ceramic slurry is obtained by tape casting to obtain a first film, and the second ceramic slurry is subjected to tape casing to obtain a second film, the porous body including at least the first film and the second film; at least the first diaphragm, the second diaphragm, and the heat generating body are co-sintered at a predetermined temperature to obtain the atomizing assembly, wherein the heating element and the first diaphragm are located at the second diaphragm the opposite sides. It further discloses a method for manufacturing an atomization core according to the preamble of claim 1.

KR20200000294U discloses a multi-temperature region heating ceramic heating element for an electronic cigarette, including a first ceramic substrate and a second ceramic substrate, and the first ceramic substrate and the second ceramic substrate are wound after overlapping and have a cylindrical or elliptic structure having a central hole. Forming a coating layer is provided on the inner wall surface of the structure, the heating wire circuit is installed in the interior of the structure, the heating wire circuit may be divided into a multi-stage heating temperature region or one end temperature control region and a multi-stage temperature region. An electrode pad is provided correspondingly to each of the heating wire circuits of each stage, or one independent electrode pad and one common electrode pad are provided, and electrode lead wires are installed on both the electrode pad and the common electrode pad, and are common to the common electrode pad. The circuit is welded through the conductor solder.

### SUMMARY

The invention is set out in the appended set of claims.

Beneficial effects of the present disclosure are as follows: different from the related art, the present disclosure provides the method for manufacturing the atomization core, the atomization core, and the electronic atomization device. The method for manufacturing the atomization core is defined by claim 1.

### BRIEF DESCRIPTION OF THE DRAWINGS

FIG. 1 is a schematic flowchart of an embodiment of a method for manufacturing an atomization core according to the present disclosure.
FIG. 2(a) is a schematic structural diagram corresponding to step S11 of the method for manufacturing the atomization core shown in FIG. 1.
FIG. 2(b) is a schematic structural diagram corresponding to step S12 of the method for manufacturing the atomization core shown in FIG. 1.
FIG. 2(c) is a schematic structural diagram corresponding to step S13 of the method for manufacturing the atomization core shown in FIG. 1.
FIG. 2(d) is a schematic structural diagram corresponding to step S14 of the method for manufacturing the atomization core shown in FIG. 1.
FIG. 3 is a schematic flowchart of another embodiment of the method for manufacturing the atomization core according to the present disclosure.
FIG. 4 is a schematic structural diagram of an embodiment of the atomization core according to the present disclosure.
FIG. 5 is a top view of the atomization core shown in FIG. 4.
FIG. 6 is a schematic structural diagram of an embodiment of an electronic atomization device according to the present disclosure.

### DETAILED DESCRIPTION

Technical solutions of embodiments of the present disclosure are described in detail below with reference to the accompanying drawings of this specification.

In the following description, for the purpose of illustration rather than limitation, specific details such as the specific system structure, interface, and technology are proposed for a thorough understanding of the present disclosure.

The technical solutions in the embodiments of the present disclosure are clearly and completely described below with reference to the accompanying drawings in the embodiments of the present disclosure.

In the present disclosure, the terms "first", "second", "third" are used for descriptive purposes only and are not to be construed as indicating or implying relative importance or implicitly indicating the number of indicated technical features. Therefore, features defined by "first", "second", "third" can explicitly or implicitly include at least one of the features. In the description of the present disclosure, "more" means at least two, such as two and three unless it is specifically defined otherwise. All directional indications (for example, up, down, left, right, front, and rear) in the embodiments of the present disclosure are only used for explaining relative position relationships, movement situations or the like between the various components in a specific posture (as shown in the accompanying drawings). If the specific posture changes, the directional indications change accordingly. In addition, the terms "include", "have", and any variant thereof are intended to cover a non-exclusive inclusion. For example, a process, method, system, product, or device that includes a series of steps or units is not limited to the listed steps or units, but further optionally includes a step or unit that is not listed, or further optionally includes another step or unit that is intrinsic to the process, method, product, or device.

Embodiments mentioned in the specification means that particular features, structures, or characteristics described with reference to the embodiment may be included in at least one embodiment of the present disclosure. The term appearing at different positions of this specification may not refer to the same embodiment or an independent or alternative embodiment that is mutually exclusive with another embodiment. A person skilled in the art explicitly or implicitly understands that the embodiments described in the specification may be combined with other embodiments.

According to the present invention, a method for manufacturing an atomization core is provided. The method for manufacturing the atomization core includes: fabricating a porous lamellar green compact, and a heating circuit on the porous lamellar green compact; winding the porous lamellar green compact on a mould to form an inner tube preform, and the heating circuit being disposed on the inner surface of the inner tube preform; forming an outer tube preform on the outer surface of the inner tube preform by an injection molding process, wherein a slurry is injected on the side of the inner tube preform away from the heating circuit and the inner surface of the outer tube preform is appressed against the outer surface of the inner tube preform; and removing the mould, and sintering the outer tube preform, the inner tube preform, and the heating circuit.

In some embodiments, the removing the mould, and sintering the outer tube preform, the inner tube preform, and the heating circuit includes: resting the outer tube preform, the inner tube preform, the heating circuit and the mould under a normal pressure; removing the mould along the axial direction of an inner tube; and performing normal-pressure sintering on the outer tube preform, the inner tube preform, and the heating circuit at a temperature falling in the range from 700 degrees Celsius to 1000 degrees Celsius in air atmosphere.

In some embodiments, the fabricating the porous lamellar green compact, and the heating circuit on the porous lamellar green compact includes: manufacturing a first slurry by using raw materials for forming the porous lamellar green compact; manufacturing the porous lamellar green compact by casting process using the first slurry, and thickness of the porous lamellar green compact falling in the range from 0.075 millimeters to 0.5 millimeters; and manufacturing the heating circuit on the porous lamellar green compact by screen printing.

In some embodiments, the forming the outer tube preform on the outer surface of the inner tube preform includes: manufacturing a second slurry by using raw materials for forming the outer tube preform; and injecting the second slurry on the side of the inner tube preform away from the heating circuit. The inner surface of the outer tube preform is appressed against the outer surface of the inner tube preform, and the thickness of the outer tube preform falls in the range from 0.2 millimeters to 3.0 millimeters.

In some embodiments, the raw materials for forming the porous lamellar green compact include first powder and first solvent. The first powder includes ceramic powder, a first sintering aids, and a pore-forming agent. The mass percentage of the first sintering aids in the first powder falls in the range from 1% to 40%, and a percentage of the pore-forming agent is not greater than two times of the total mass of the ceramic powder and the first sintering aids. The first solvent includes at least one of a dispersant, an adhesive, a plasticizer, and a coupling agent, and the mass percentage of the adhesive falls in the range from 1% to 40% of the first solvent.

In some embodiments, the raw materials for forming the outer tube preform include second powder and second solvent. The second powder includes ceramic powder, a second sintering aids, and a pore-forming agent. The mass percentage of the second sintering aids falls in the range from 2% to 40% of the total mass of the second power. The mass percentage of the pore-forming agent falls in the range from 5% to 80% of the total mass of the second powder. The second sintering aids includes a framework-forming agent, and the mass percentage of the framework-forming agent falls in the range from 5% to 150% of the total mass of the second powder.

In some embodiments, the raw materials for forming the outer tube preform include second powder and second solvent. The second powder includes ceramic powder, a second sintering aids, and a pore-forming agent. The mass percentage of the second sintering aids falls in the range from 2% to 40% of the total mass of the second power. The mass percentage of the pore-forming agent falls in the range from 5% to 80% of the total mass of the second powder. The second sintering aids includes an organic monomer, and the mass percentage of the organic monomer falls in the range from 0.1% to 20% of the total mass of the second powder.

According to another non-claimed aspect of the present disclosure, an atomization core is provided. The atomization core includes a tubular porous substrate defining an atomization chamber and configured to guide liquid outside the tubular porous substrate into the atomization chamber, and a heating element. The heating element is disposed on the inner surface of the tubular porous substrate and configured to heat and atomize the liquid guided into the atomization chamber.

In some embodiments, the tubular porous substrate includes an inner tube and an outer tube. The outer tube is sleeved on the inner tube, the outer surface of the inner tube is appressed against the inner surface of the outer tube. The atomization chamber is defined by the inner tube. The heating element is disposed on the inner surface of the inner tube.

In some embodiments, the heating element includes a heating circuit, disposed on the inner surface of the inner tube, and at least one of electrodes, connected to two ends of the heating circuit, and disposed inside the atomization chamber and drawn from an end of the atomization chamber 30 away from a communication air outlet channel 401.

In some embodiments, materials of the tubular porous substrate include porous ceramics. The porous ceramics has a porosity falling in the range from 30% to 80% and a pore size falling in the range from 10 micrometers to 150 micrometers.

In some embodiments, the heating element includes a heating film. The heating film include at least one of platinum, gold, silver, silver-palladium, and silver-platinum.

In some embodiments, a wall thickness of the inner tube falls in the range from 0.075 millimeters to 0.5 millimeters. A wall thickness of the outer tube falls in the range from 0.2 millimeters to 3.0 millimeters.

According to another non-claimed aspect of the present disclosure, an electronic atomization device is provided. The electronic atomization device includes a liquid storage chamber configured to store an atomization medium and the atomization core described above. The atomization medium in the liquid storage chamber is guided to the atomization chamber through the tubular porous substrate.

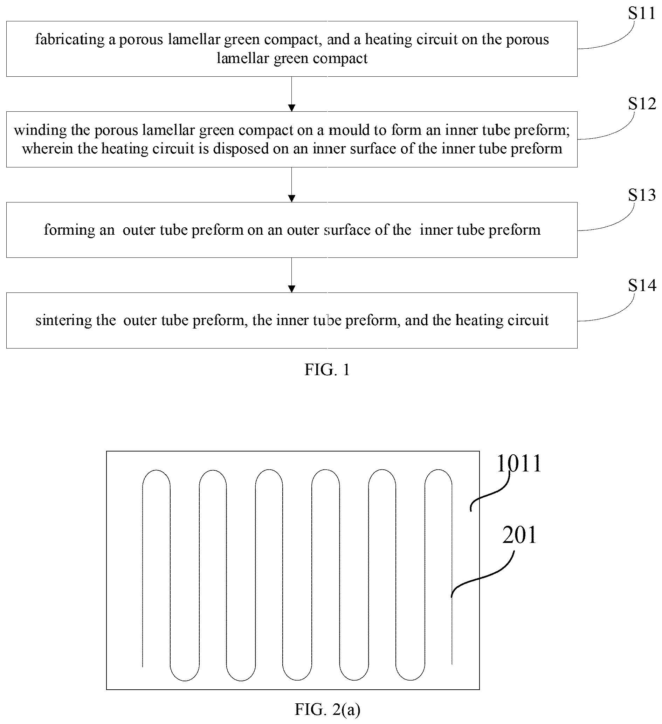

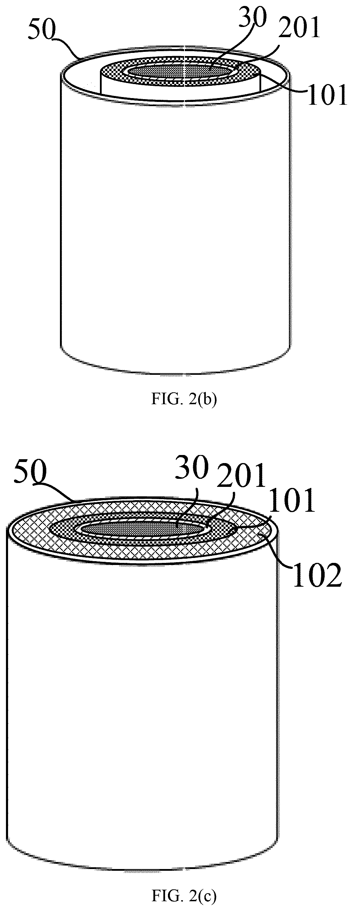

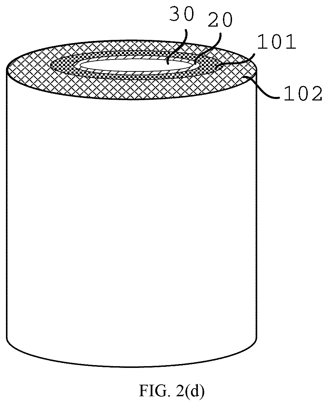

Referring to FIG. 1 and FIG. 2, FIG. 1 is a schematic flowchart of an embodiment of a method for manufacturing an atomization core according to the present disclosure. FIG. 2(a) is a schematic structural diagram corresponding to step S11 of the method for manufacturing the atomization core shown in FIG. 1. FIG. 2(b) is a schematic structural diagram corresponding to step S12 of the method for manufacturing the atomization core shown in FIG. 1. FIG. 2(c) is a schematic structural diagram corresponding to step S13 of the method for manufacturing the atomization core shown in FIG. 1. FIG. 2(d) is a schematic structural diagram corresponding to step S14 of the method for manufacturing the atomization core shown in FIG. 1. In this embodiment, the method for manufacturing the atomization core 100 includes the following steps.

S11, a porous lamellar green compact is fabricated, and a heating circuit is fabricated on the porous lamellar green compact.

Specifically, raw materials for forming the porous lamellar green compact 1011 are manufactured into a first slurry, and the sheet-like porous lamellar green compact 1011 is formed by casting process. Specifically, the casting process is a process of placing a fluid slurry on a carrying plane, and forming a sheet with uniform thickness by scraping or rolling. The first slurry is manufactured into the porous lamellar green compact 1011 by the casting process, and the thickness of the porous lamellar green compact 1011 falls in the range from 0.075 millimeters to 0.5 millimeters. The heating circuit 201 is printed on the porous lamellar green compact 1011 (as shown in FIG. 2(a)). The raw materials for forming the porous lamellar green compact 1011 include first powder and first solvent. The first powder includes ceramic powder, a first sintering aids, and a pore-forming agent. The mass percentage of the first sintering aids in the first powder falls in the range from 1% to 40%. The mass percentage of the pore-forming agent is less than or equal to two times of the total mass of the ceramic powder and the first sintering aids. The first solvent includes at least one of a dispersant, an adhesive, a plasticizer, and a coupling agent. The mass percentage of the adhesive falls in the range from 1% to 40% of the first solvent.

S12, the porous lamellar green compact is winded on a mould so as to form an inner tube preform, and the heating circuit is disposed on the inner surface of the inner tube preform.

Specifically, the obtained porous lamellar green compact 1011 is winded on the mould 50 to form the inner tube preform 101 (as shown in FIG. 2(c)). The mould 50 is substantially an annular cylinder structure. The porous lamellar green compact 1011 is winded on an inner ring of the annular mould 50, such that a side of the porous lamellar green compact 1011 printing the heating circuit 201 is attached the inner ring of the annular mould 50. The inner ring is a hollow structure or a solid structure.

S13, an outer tube preform is formed on the outer surface of the inner tube preform.

Specifically, the outer tube preform 102 is formed on the outer surface of the inner tube preform by an injection molding process. Raw materials for forming the outer tube preform 102 are manufactured into a second slurry. The second slurry is injected on the side of the inner tube preform 101 away from the heating circuit 201. The inner surface of the outer tube preform 102 is appressed against the outer surface of the inner tube preform 101. The thickness of the outer tube preform 102 falls in the range from 0.2 millimeters to 3.0 millimeters (as shown in FIG. 2(c)). The raw materials for forming the outer tube preform 102 include second powder and second solvent. The second powder includes ceramic powder, a second sintering aids, and a pore-forming agent. The mass percentage of the second sintering aids falls in the range from 2% to 40% of the total mass of the second power. The mass percentage of the pore-forming agent in the range from is 5% to 80% of the total mass of the second powder. The second sintering aids includes a framework-forming agent, and the mass percentage of the framework-forming agent falls in the range from 5% to 150% of the total mass of the second powder. In an embodiment, the raw materials for forming the outer tube preform 102 include second powder and second solvent. The second powder includes ceramic powder, a second sintering aids, and a pore-forming agent. The mass percentage of the second sintering aids falls in the range from 2% to 40% of the total mass of the second power. The mass percentage of the pore-forming agent falls in the range from 5% to 80% of the total mass of the second powder. The second sintering aids includes an organic monomer, and the mass percentage of the organic monomer falls in the range from 0.1% to 20% of the total mass of the second powder.

S14, the mould is removed, and the outer tube preform, the inner tube preform, and the heating circuit as a whole is sintered.

Specifically, the outer tube preform 102, the inner tube preform 101, the heating circuit 201 and the mould 50 as the whole are rested under a normal pressure. The mould 50 is removed along the axial direction of the inner tube preform 101 (as shown in FIG 2(d)). An inner chamber of the inner tube preform 101 forms an atomization chamber 30. Normal-pressure sintering is performed on the whole of the outer tube preform 102, the inner tube preform 101, and the heating circuit 201 as a whole at a temperature falling in the range from 700 degrees Celsius to 1000 degrees Celsius in air atmosphere.

According to the method for manufacturing the atomization core provided in this embodiment of the present disclosure, the heating circuit is formed on the porous lamellar green compact and the inner tube preform is formed by winding; the outer tube preform is formed on the peripheral of the inner tube preform; the inner tube preform having the heating circuit and the outer tube preform formed on an outer side are sintered, thereby reducing the processing difficulty of manufacturing the heating circuit on the inner surface of the inner tube preform, simplifying the processing of the atomization core, and reducing manufacturing costs.

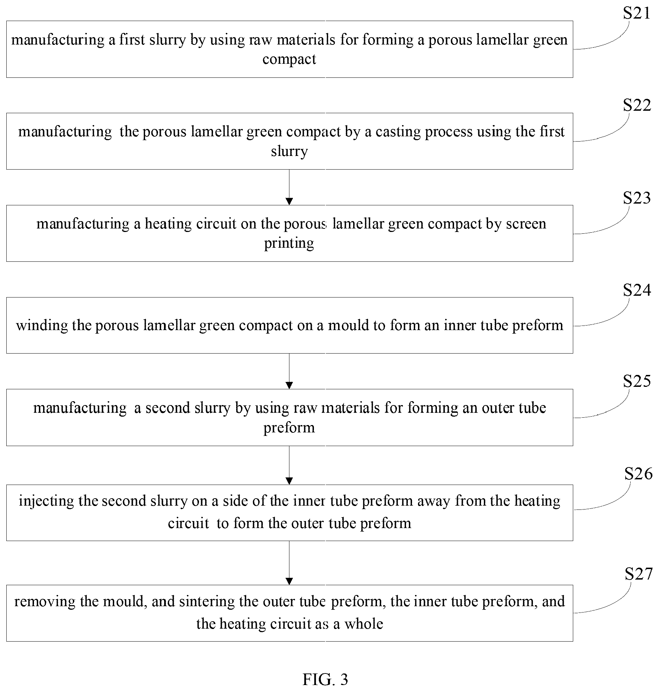

Referring to FIG. 3, FIG. 3 is a schematic flowchart of another embodiment of the method for manufacturing the atomization core according to the present disclosure. In this embodiment, the method for manufacturing the atomization core 100 includes the following steps.

S21, the first slurry is manufactured with the raw materials for forming the porous lamellar green compact.

Specifically, the raw materials for forming the porous lamellar green compact 1011 are prepared, and the prepared raw materials are mixed uniformly to manufacture the first slurry. The raw materials for forming the porous lamellar green compact 1011 include the first powder and the first solvent. The first powder includes the ceramic powder, the first sintering aids, and the pore-forming agent. The mass percentage of the first sintering aids in the first powder falls in the range from 1% to 40%, and the mass percentage of the pore-forming agent is not greater than two times of the total mass of the ceramic powder and the first sintering aids. The first solvent includes at least one of the dispersant, the adhesive, the plasticizer, and the coupling agent. The mass percentage of the adhesive falls in the range from 1% to 40% of the first solvent. Mass percentages of the first sintering aids, the pore-forming agent, and the adhesive is determined according to a sintering shrinkage of the required inner tube preform.

In an embodiment, the ceramic powder includes one or more of silicon dioxide, quartz sand, diatomite, alumina, magnesium oxide, kaolin, mullite, and cordierite. The sintering aids includes one or more of anhydrous sodium carbonate, anhydrous potassium carbonate, albite, potash feldspar, clay, bloating clay, and glass powder. The pore-forming agent includes at least one of sawdust, cenosphere, graphite powder, amylum, flour, walnut powder, polystyrene spheres, and polymethylmethacrylate spheres. The adhesive includes one or more of polyvinyl acetate, polyvinyl acetal, ethylene-vinyl acetate copolymer resin, vinyl chloride-vinyl acetate copolymer resin, perchlorovinyl resin, polyacrylate, polyamide, and polysulfone. The framework-forming agent includes one or more of paraffin, microcrystalline paraffin, vegetable oil, polyethylene, polypropylene, atactic polypropylene, polystyrene, polymethylmethacrylate, ethylene-vinyl acetate copolymer, and ethylene-ethyl acrylate copolymer. The organic monomer includes one or more of agar, agarose, gelatin, pectin, chitosan, protein, sodium alginate, acrylamide, alkyl methacrylate, allyl methacrylate, propyl methacrylate, and methyl methacrylate.

S22, the porous lamellar green compact is manufactured by the casting process using the first slurry.

Specifically, the porous lamellar green compact 1011 is manufactured by the casting process using the manufactured first slurry, namely, a porous lamellar sheet is formed. In an embodiment, the porous lamellar green compact 1011 is alternatively manufactured by film rolling using the manufactured first slurry. The thickness of the porous lamellar green compact 1011 falls in the range from 0.075 millimeters to 0.5 millimeters.

S23, the heating circuit is manufactured on the porous lamellar green compact by screen printing.

Specifically, the heating circuit 201 is printed on a side surface of the porous lamellar green compact 1011. In an embodiment, materials of the heating circuit 201 is silver, silver-palladium, or silver-platinum, or is any one of gold or platinum. The materials of the heating circuit 201 have a good heat resistance, such that the heating circuit 201 is sintered together with the inner tube preform 101 and the outer tube preform 102 at the temperature falling in the range from 700 degrees Celsius to 1000 degrees Celsius. The heating circuit 201 is also made by any one of sputtering, evaporation, screen printing, coating, and inkjet printing. Alternatively, the heating circuit 201 is also made by other manners, as long as the heating circuit meeting requirements is manufactured.

S24, the porous lamellar green compact is winded on the mould to form the inner tube preform.

Specifically, the porous lamellar green compact 1011 printed on which the heating circuit 201 is winded on the mould 50 to form the inner tube preform 101. The porous lamellar green compact 1011 surrounds the inner ring of the mould 50 to form a hollow tubular structure, namely, the inner tube preform 101 is formed. The side of the porous lamellar green compact 1011 printing the heating circuit is attached the inner ring structure.

S25, the second slurry is manufactured with the raw materials for forming the outer tube preform.

Specifically, the raw materials for forming the outer tube preform 102 are prepared, and the prepared raw materials for forming the outer tube preform 102 are mixed uniformly to form the second slurry according to a preset ratio. The second slurry is injected on the side of the inner tube preform 101 away from the heating circuit 201. The inner surface of the outer tube preform 102 is appressed against the outer surface of the inner tube preform 101, and the thickness of the outer tube preform 102 falls in the range from 0.2 millimeters to 3.0 millimeters. The raw materials of the second slurry include the second powder and the second solvent. The second powder includes the ceramic powder, the second sintering aids, and the pore-forming agent. The mass percentage of the second sintering aids falls in the range from 2% to 40% of the total mass of the second power. The mass percentage of the pore-forming agent falls in the range from 5% to 80% of the total mass of the second powder. The second sintering aids includes the framework-forming agent, and the mass percentage of the framework-forming agent falls in the range from 5% to 150% of the total mass of the second powder. The second sintering aids further includes a surfactant, a plasticizer, and a coupling agent. Mass percentages of the second sintering aids, the pore-forming agent, and the framework-forming agent is determined according to the sintering shrinkage of the required outer tube preform 102.

In another embodiment, the raw materials of the second slurry include the second powder and the second solvent. The second powder includes the ceramic powder, the second sintering aids, and the pore-forming agent. The mass percentage of the second sintering aids falls in the range from 2% to 40% of the total mass of the second power. The mass percentage of the pore-forming agent falls in the range from 5% to 80% of the total mass of the second powder. The second sintering aids includes the organic monomer, and the mass percentage of the organic monomer falls in the range from 0.1% to 20% of the total mass of the second powder. The second sintering aids further includes deionized water, a crosslinking agent, an initiating agent, a dispersant, and a PH regulator. Mass percentages of the second sintering aids, the pore-forming agent, and the organic monomer is determined according to the sintering shrinkage of the required outer tube preform 102.

In an embodiment, the ceramic powder includes one or more of the silicon dioxide, the quartz sand, diatomite, the alumina, magnesium oxide, the kaolin, the mullite, and the cordierite. The sintering aids includes one or more of the anhydrous sodium carbonate, the anhydrous potassium carbonate, the albite, the potash feldspar, the clay, the bloating clay, and the glass powder. The pore-forming agent includes at least one of the sawdust, the cenosphere, the graphite powder, the amylum, the flour, the walnut powder, the polystyrene spheres, or the polymethylmethacrylate spheres. The adhesive includes one or more of the polyvinyl acetate, the polyvinyl acetal, the ethylene-vinyl acetate copolymer resin, the vinyl chloride-vinyl acetate copolymer resin, the perchlorovinyl resin, the polyacrylate, the polyamide, and the polysulfone. The framework-forming agent includes one or more of the paraffin, the microcrystalline paraffin, the vegetable oil, the polyethylene, the polypropylene, the atactic polypropylene, the polystyrene, the polymethylmethacrylate, the ethylene-vinyl acetate copolymer, and the ethylene-ethyl acrylate copolymer. The organic monomer includes one or more of the agar, the agarose, the gelatin, the pectin, the chitosan, the protein, the sodium alginate, the acrylamide, the alkyl methacrylate, the allyl methacrylate, the propyl methacrylate, and the methyl methacrylate.

In another embodiment, the sintering shrinkage of the inner tube preform 101 is close to the sintering shrinkage of the outer tube preform 102. In an embodiment, the sintering shrinkage of the inner tube preform 101 is the same as the sintering shrinkage of the outer tube preform 102.

S26, the second slurry is injected on the side of the inner tube preform away from the heating circuit so as to form the outer tube preform.

Specifically, the second slurry is injected on side of the inner tube preform 101 away from the heating circuit 201 so as to form the outer tube preform 102. The inner surface of the outer tube preform 102 is appressed against the outer surface of the inner tube preform 101. The thickness of the outer tube preform 102 falls in the range from 0.2 millimeters to 3.0 millimeters.

S27, the mould is removed, and the outer tube preform, the inner tube preform, and the heating circuit as the whole is sintered.

Specifically, the outer tube preform 102, the inner tube preform 101, the heating circuit 201, and the mould 50 as the whole are rested under the normal pressure. The mould 50 is removed along the axial direction of the inner tube preform 101. The normal-pressure sintering is performed on the whole of the outer tube preform 102, the inner tube preform 101, and the heating circuit 201 at the temperature falling in the range from 700 degrees Celsius to 1000 degrees Celsius in the air atmosphere. In a specific embodiment, after the operation of forming the outer tube preform 102 by using the second slurry is completed, the mould 50 is removed after the entire prefabricated structure is rested under the normal pressure for 15 minutes. The structure preform is reserved. The normal-pressure sintering is performed on the whole of the outer tube preform 102, the inner tube preform 101, and the heating circuit 201 at a sintering temperature of the temperature falling in the range from 700 degrees Celsius to 1000 degrees Celsius in the air. After sintered, two electrodes of the heating element are drawn from an end of the atomization chamber away from a communication air outlet channel, for the heating element to be connected to a power supply through the electrodes.

The method for manufacturing the atomization core provided in this embodiment includes: printing the heating circuit on the prepared porous lamellar green compact; winding the porous lamellar green compact on the mould to form the inner tube preform, such that cause the heating circuit is close to the mould; forming the outer tube preform on the side of the inner tube preform away from the heating circuit through the injection moulding; removing the mould; and performing the normal-pressure sintering on the whole of the outer tube preform, the inner tube preform, and the heating circuit to obtain the atomization core. The heating circuit is formed on the porous lamellar green compact and the inner tube preform is formed by winding. The outer tube preform is formed on a periphery of the inner tube preform. The inner tube preform having the heating circuit and the outer tube preform formed on an outer side are sintered, thereby reducing the processing difficulty of manufacturing the heating circuit on the inner surface of the inner tube preform, simplifying the processing of the atomization core, and reducing manufacturing costs.

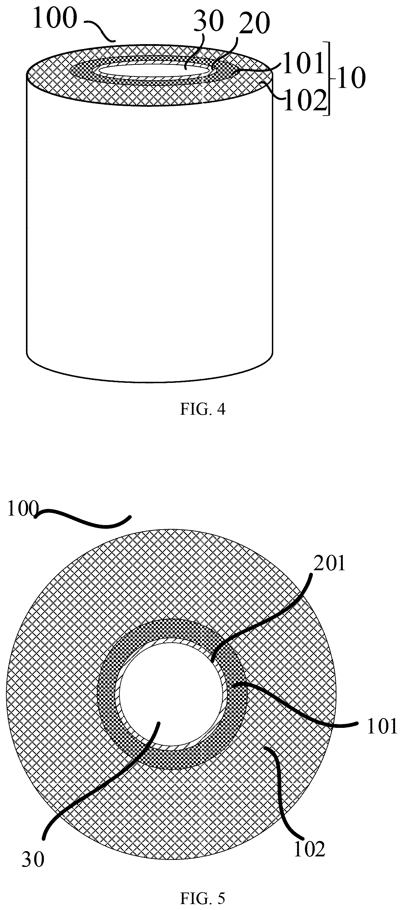

Referring to FIG. 4 and FIG. 5, FIG. 4 is a schematic structural diagram of an embodiment of the atomization core according to the present disclosure. FIG. 5 is a top view of the atomization core shown in FIG. 4. In this embodiment, the atomization core 100 is provided, and the atomization core 100 includes a tubular porous substrate 10 and the heating element 20.

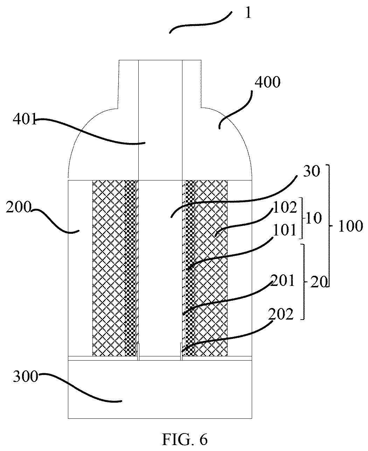

The tubular porous substrate 10 defines an atomization chamber 30, and the tubular porous substrate 10 is configured to guide liquid outside the tubular porous substrate 10 into the atomization chamber 30. The atomization chamber 30 is in communication with the air outlet channel 401 (as shown in FIG. 6) of a nozzle 400. In an embodiment, the tubular porous substrate 10 includes an inner tube 101 and an outer tube 102. The outer tube 102 is sleeved on the inner tube 101, the outer surface of the inner tube 101 is appressed against the inner surface of the outer tube 102. The atomization chamber 30 is defined by the inner tube 101. The heating element 20 is disposed on the inner surface of the inner tube 101. A wall thickness of the inner tube 101 falls in the range from 0.075 millimeters to 0.5 millimeters. A wall thickness of the outer tube 102 is in the range from 0.2 millimeters to 3.0 millimeters. In an embodiment, materials of the tubular porous substrate 10 include porous ceramics, and the porous ceramics has a porosity falling in the range from 30% to 80% and a pore size falling in the range from 10 micrometers to 150 micrometers. In an embodiment, a pore size on the inner tube 101 is less than a pore size on the outer tube 102, such that a flow speed of the liquid guided into the atomization chamber 30 is further adjusted, thereby preventing an excessively high speed of the guided liquid from affecting an atomization effect. In an embodiment, the inner tube 101 and the outer tube 102 have similar ceramic components, and similar shrinkage of the materials are also similar, such that the inner tube and the outer tube match with each other, thus after sintered, the inner tube 101 and the outer tube 102 are attached to each other to form an integral structure.

The heating element 20 is disposed on the inner surface of the tubular porous substrate 10, and configured to heat and vaporize the liquid guided into the atomization chamber 30. In an embodiment, the heating element 20 includes the heating circuit 201. The heating circuit 201 is in an S shape, or a ring shape. The heating element 20 includes a heating film. The metal components of the heating film include at least one of platinum, the gold, the silver, the silver-palladium, and the silver-platinum. The heating element 20 further includes electrodes 202, and the electrodes 202 are connected to two ends of the heating circuit 201. The electrodes 202 are drawn from the end of the atomization chamber 30 away from the communication air outlet channel 401. The liquid in this embodiment is an atomization medium (oil, leaf, flower, or grass/liquid, flower, oil, or paste).

According to the atomization core provided in this embodiment, the atomization medium in a liquid storage chamber is guided into the atomization chamber through the disposed tubular porous substrate. The atomization medium in the atomization chamber is heated by the heating element, and the atomization medium directly enters the air outlet channel from the atomization chamber after being atomized, and directly enters a mouth of a user. The entire air passage is short, the structure is simple, and the atomization efficiency is high, thus users' requirements on content and taste of aerosols can be met.

Referring to FIG. 6, FIG. 6 is a schematic structural diagram of an embodiment of an electronic atomization device according to the present disclosure. This embodiment provides an electronic atomization device 1 is provided in the embodiment of the present disclosure. The electronic atomization device 1 includes the liquid storage chamber 200 configured to store the atomization medium, the atomization core 100, and the nozzle 400. The atomization medium in the liquid storage chamber 200 is guided to the atomization chamber 30 through the tubular porous substrate 10. The structure of the atomization core 100 is as described in the foregoing embodiments. In an embodiment, the atomization chamber 30 of the atomization core 100 is in direct communication with the air outlet channel 401 of the nozzle 400.

In another embodiment, the atomization core 100 includes the tubular porous substrate 10 and the heating element 20. The tubular porous substrate 10 includes the inner tube 101 and the outer tube 102. The outer tube 102 is sleeved on the inner tube 101, and the inner tube 101 and the outer tube 102 is disposed integrally. The heating element 20 includes the heating circuit 201 and the electrodes 202. The electrodes 202 are electrically connected to the two ends of the heating circuit 201. The heating circuit 201 is disposed on the inner surface of the inner tube 101. The electrodes 202 are disposed inside the atomization chamber 30. The liquid storage chamber 200 is disposed on the periphery of the atomization core 100, the liquid storage chamber 200 is configured to store the atomization medium. The atomization medium in the liquid storage chamber 200 is guided into the atomization chamber 30 of the atomization core 100 through the tubular porous substrate 10.

The electronic atomization device 1 further includes the power supply 300. The power supply 300 is disposed at a bottom of the atomization core 100. The power supply 300 is electrically connected to the electrodes 202. The nozzle 400 is disposed at a top of the atomization core 100. The nozzle 400 includes the air outlet channel 401, and the air outlet channel 401 is in communication with the atomization chamber 30 of the atomization core 100.

When using the electronic atomization device 1, the user turns on the power supply 300. The atomization medium in the atomization chamber 30 is atomized by the heating circuit 201. After atomized, the atomization medium directly enters the air outlet channel 401 of the nozzle 400 from the atomization chamber 30, and directly enters into the mouth of the user. The entire air passage is short, such that the users' requirements on the content and the taste of the aerosols can be met.

According to the electronic atomization device provided in this embodiment, the atomization medium in the liquid storage chamber is guided into the atomization chamber through the disposed atomization core. The atomization medium in the atomization chamber is heated and atomized by the heating element. After atomized, the atomization medium directly enters the air outlet channel of the nozzle from the atomization chamber, and directly enters the mouth of the user. The entire air passage is short, the structure is simple, and the atomization efficiency is high, such that users' requirements on the content and the taste of the aerosols can be met.

The foregoing descriptions are merely embodiments of the present disclosure, and the protection scope of the present disclosure is not limited thereto. All equivalent structure or process changes made according to the content of this specification and accompanying drawings in the present disclosure shall fall within the protection scope of the present invention as defined by the appended claims.

## Claims

1. A method for manufacturing an atomization core (100), comprising:
fabricating a porous lamellar green compact (1011), and a heating circuit (20) on the porous lamellar green compact (S11);
winding the porous lamellar green compact on a mould (50) to form an inner tube preform (101);
wherein the heating circuit is disposed on the inner surface of the inner tube preform (S12); wherein the method further comprises:
forming an outer tube preform (102) on the outer surface of the inner tube preform (S13); ; and
sintering the outer tube preform, the inner tube preform, and the heating circuit (S14); **characterized in that** the step of forming the outer tube preform is performed by an injection molding process, wherein a slurry is injected on the side of the inner tube preform away from the heating circuit and the inner surface of the outer tube preform is appressed against the outer surface of the inner tube preform; and **in that** before the sintering step, the mould is removed.

2. The method for manufacturing the atomization core according to claim 1, wherein the sintering the outer tube preform, the inner tube preform, and the heating circuit (S14) comprises:
resting the outer tube preform, the inner tube preform, the heating circuit and the mould under a normal pressure;
removing the mould along the axial direction of the inner tube preform; and
performing normal-pressure sintering on the outer tube preform, the inner tube preform, and the heating circuit as a whole at a temperature falling in the range from 700 degrees Celsius to 1000 degrees Celsius in air atmosphere.

3. The method for manufacturing the atomization core according to claim 1, wherein the slurry injected in the outer tube preform forming step is a second slurry and the fabricating the porous lamellar green compact, and the heating circuit on the porous lamellar green compact (S11) comprises:
manufacturing a first slurry with the raw materials for forming the porous lamellar green compact (S21);
manufacturing the porous lamellar green compact by casting process using the first slurry (S22); wherein the thickness of the porous lamellar green compact falls in the range from 0.075 millimeters to 0.5 millimeters; and
manufacturing the heating circuit on the porous lamellar green compact by screen printing (S23).

4. The method for manufacturing the atomization core according to claim 3 , wherein the forming the outer tube preform on the outer surface of the inner tube preform (S13) comprises:
manufacturing the second slurry with the raw materials for forming the outer tube preform (S25); and
injecting the second slurry on a side of the inner tube preform away from the heating circuit (S26); wherein the inner surface of the outer tube preform is appressed against the outer surface of the inner tube preform, and the thickness of the outer tube preform falls in the range from 0.2 millimeters to 3.0 millimeters.

5. The method for manufacturing a atomization core according to claim 3, wherein the raw materials for forming the porous lamellar green compact comprise first powder and first solvent; the first powder comprises ceramic powder, a first sintering aids, and a pore-forming agent; the mass percentage of the first sintering aids in the first powder falls in the range from 1% to 40%, and the mass percentage of the pore-forming agent is not greater than two times of the total mass of the ceramic powder and the first sintering aids; the first solvent comprises at least one of a dispersant, an adhesive, a plasticizer, and a coupling agent, and the mass percentage of the adhesive in the first solvent falls in the range from 1% to 40%.

6. The method for manufacturing the atomization core according to claim 4, wherein the raw materials for forming the outer tube preform comprise second powder and second solvent; the second powder comprises ceramic powder, a second sintering aids, and a pore-forming agent; the mass percentage of the second sintering aids falls in the range from 2% to 40% of the total mass of the second power, the mass percentage of the pore-forming agent falls in the range from 5% to 80% of the total mass of the second powder, the second sintering aids comprises a framework-forming agent, and the mass percentage of the framework-forming agent falls in the range from 5% to 150% of the total mass of the second powder.

7. The method for manufacturing a atomization core according to claim 4, wherein the raw materials for forming the outer tube preform comprise second powder and second solvent; the second powder comprises ceramic powder, a second sintering aids, and a pore-forming agent; the mass percentage of the second sintering aids falls in the range from 2% to 40% of the total mass of the second power, the mass percentage of the pore-forming agent falls in range from 5% to 80% of the total mass of the second powder, the second sintering aids comprises an organic monomer, and the mass percentage of the organic monomer falls in the range from 0.1% to 20% of the total mass of the second powder.

## Patentansprüche

1. Ein Verfahren zur Herstellung eines Zerstäubungskerns (100), umfassend:
Herstellen eines porösen, lamellar ausgebildeten Grünkörpers (1011) sowie Ausbilden eines Heizkreises (20) auf dem porösen, lamellar ausgebildeten Grünkörper (S11);
Aufwickeln des porösen, lamellar ausgebildeten Grünkörpers auf eine Form (50), um einen Innenrohr-Vorformling (101) zu bilden,
wobei der Heizkreis auf der inneren Oberfläche des Innenrohr-Vorformlings angeordnet ist (S12);
wobei das Verfahren ferner umfasst:
Ausbilden eines Außenrohr-Vorformlings (102) auf einer Außenfläche des Innenrohr-Vorformlings (S13); und
Sintern des Außenrohr-Vorformlings, des Innenrohr-Vorformlings und des Heizkreises (S14);
**dadurch gekennzeichnet, dass** der Schritt des Ausbildens des Außenrohr-Vorformlings mittels eines Spritzgießverfahrens durchgeführt wird, wobei eine Suspension auf eine dem Heizkreis abgewandte Seite des Innenrohr-Vorformlings eingespritzt wird, sodass eine Innenfläche des Außenrohr-Vorformlings an der Außenfläche des Innenrohr-Vorformlings anliegt; und dass vor dem Sinterschritt die Form entfernt wird.

2. Das Verfahren zur Herstellung des Zerstäubungskerns nach Anspruch 1, wobei der Schritt des Sinterns des Außenrohr-Vorformlings, des Innenrohr-Vorformlings und des Heizkreises (S14) umfasst:
Anordnen des Außenrohr-Vorformlings, des Innenrohr-Vorformlings, des Heizkreises sowie der Form unter Normaldruck;
Entfernen der Form in axialer Richtung des Innenrohr-Vorformlings; und
Durchführen eines Normaldrucksinterns des Außenrohr-Vorformlings, des Innenrohr-Vorformlings und des Heizkreises als Ganzes bei einer Temperatur im Bereich von 700 °C bis 1000 °C in Luftatmosphäre.

3. Das Verfahren zur Herstellung des Zerstäubungskerns nach Anspruch 1, wobei die in dem Schritt des Formens des Außenrohr-Vorformlings eingespritzte Suspension eine zweite Suspension ist und dass der Schritt des Herstellens des porösen, lamellar ausgebildeten Grünkörpers sowie des Heizkreises auf dem porösen, lamellar ausgebildeten Grünkörper (S11) umfasst:
Herstellen einer ersten Suspension aus Rohmaterialien zur Bildung des porösen, lamellar ausgebildeten Grünkörpers (S21);
Herstellen des porösen, lamellar ausgebildeten Grünkörpers mittels eines Gießverfahrens unter Verwendung der ersten Suspension (S22), wobei die Dicke des porösen, lamellar ausgebildeten Grünkörpers im Bereich von 0,075 mm bis 0,5 mm liegt; und
Herstellen des Heizkreises auf dem porösen, lamellar ausgebildeten Grünkörper mittels Siebdrucks (S23).

4. Das Verfahren zur Herstellung des Zerstäubungskerns nach Anspruch 3, wobei der Schritt des Ausbildens des Außenrohr-Vorformlings auf der Außenfläche des Innenrohr-Vorformlings (S13) umfasst:
Herstellen der zweiten Suspension aus Rohmaterialien zur Bildung des Außenrohr-Vorformlings (S25); und
Einspritzen der zweiten Suspension auf eine dem Heizkreis abgewandte Seite des Innenrohr-Vorformlings (S26), wobei eine Innenfläche des Außenrohr-Vorformlings an der Außenfläche des Innenrohr-Vorformlings anliegt und die Dicke des Außenrohr-Vorformlings im Bereich von 0,2 mm bis 3,0 mm beträgt.

5. Das Verfahren zur Herstellung eines Zerstäubungskerns nach Anspruch 3, wobei die Rohmaterialien zur Bildung des porösen, lamellar ausgebildeten Grünkörpers ein erstes Pulver und ein erstes Lösungsmittel umfassen, wobei das erste Pulver keramisches Pulver, ein erstes Sinterhilfsmittel und ein Porenbildner umfasst, wobei der Massenanteil des ersten Sinterhilfsmittels im ersten Pulver im Bereich von 1 % bis 40 % liegt und der Massenanteil des Porenbildners höchstens das Zweifache der Gesamtmasse des keramischen Pulvers und des ersten Sinterhilfsmittels beträgt, wobei das erste Lösungsmittel mindestens eines aus einem Dispergiermittel, einem Bindemittel, einem Weichmacher und einem Kopplungsmittel umfasst und der Massenanteil des Bindemittels im ersten Lösungsmittel im Bereich von 1 % bis 40 % liegt.

6. Das Verfahren zur Herstellung eines Zerstäubungskerns nach Anspruch 4, wobei die Rohmaterialien zur Bildung des Außenrohr-Vorformlings eine zweite Pulverkomponente und ein zweites Lösungsmittel umfassen, wobei die zweite Pulverkomponente keramisches Pulver, ein zweites Sinterhilfsmittel und einen Porenbildner umfasst, wobei der Massenanteil des zweiten Sinterhilfsmittels im Bereich von 2 % bis 40 % der Gesamtmasse der zweiten Pulverkomponente liegt, wobei der Massenanteil des Porenbildners im Bereich von 5 % bis 80 % der Gesamtmasse der zweiten Pulverkomponente liegt, wobei das zweite Sinterhilfsmittel einen Strukturbildungsagenten umfasst und wobei der Massenanteil des Strukturbildungsagenten im Bereich von 5 % bis 150 % der Gesamtmasse der zweiten Pulverkomponente liegt.

7. Das Verfahren zur Herstellung eines Zerstäubungskerns nach Anspruch 4, wobei die Rohmaterialien zur Bildung des Außenrohr-Vorformlings eine zweite Pulverkomponente und ein zweites Lösungsmittel umfassen, wobei die zweite Pulverkomponente keramisches Pulver, ein zweites Sinterhilfsmittel und einen Porenbildner umfasst, wobei der Massenanteil des zweiten Sinterhilfsmittels im Bereich von 2 % bis 40 % der Gesamtmasse der zweiten Pulverkomponente liegt, wobei der Massenanteil des Porenbildners im Bereich von 5 % bis 80 % der Gesamtmasse der zweiten Pulverkomponente liegt, wobei das zweite Sinterhilfsmittel ein organisches Monomer umfasst und wobei der Massenanteil des organischen Monomers im Bereich von 0,1 % bis 20 % der Gesamtmasse der zweiten Pulverkomponente liegt.

## Revendications

1. Procédé de fabrication d'un noyau d'atomisation (100), comprenant :
la fabrication d'un compact vert poreux et lamellaire (1011), et la formation d'un circuit de chauffage (20) sur le compact vert poreux et lamellaire (S11) ;
l'enroulement du compact vert poreux et lamellaire sur un moule (50) afin de former une préforme de tube interne (101) ;
dans lequel le circuit de chauffage est disposé sur la surface interne de la préforme de tube interne (S12) ;
le procédé comprenant en outre :
la formation d'une préforme de tube externe (102) sur la surface externe de la préforme de tube interne (S13) ; et
le frittage de la préforme de tube externe, de la préforme de tube interne et du circuit de chauffage (S14) ;
**caractérisé en ce que** l'étape de formation de la préforme de tube externe est réalisée par un procédé de moulage par injection, dans lequel une suspension est injectée du côté de la préforme de tube interne opposé au circuit de chauffage, et dans lequel la surface interne de la préforme de tube externe est en appui contre la surface externe de la préforme de tube interne ; et **en ce que**, avant l'étape de frittage, le moule est retiré.

2. Le procédé de fabrication du noyau d'atomisation selon la revendication 1, dans lequel l'étape de frittage de la préforme de tube externe, de la préforme de tube interne et du circuit de chauffage (S14) comprend :
le maintien de la préforme de tube externe, de la préforme de tube interne, du circuit de chauffage et du moule sous une pression normale ;
le retrait du moule dans la direction axiale de la préforme de tube interne ; et
la réalisation d'un frittage à pression normale de la préforme de tube externe, de la préforme de tube interne et du circuit de chauffage dans leur ensemble, à une température comprise entre 700 °C et 1000 °C, en atmosphère d'air.

3. Le procédé de fabrication du noyau d'atomisation selon la revendication 1, dans lequel la suspension injectée dans l'étape de formation de la préforme de tube externe est une seconde suspension et dans lequel l'étape de fabrication du compact vert poreux et lamellaire et du circuit de chauffage sur le compact vert poreux et lamellaire (S11) comprend :
la fabrication d'une première suspension à partir de matières premières destinées à la formation du compact vert poreux et lamellaire (S21) ;
la fabrication du compact vert poreux et lamellaire par un procédé de coulage utilisant la première suspension (S22), la épaisseur du compact vert poreux et lamellaire étant comprise entre 0,075 mm et 0,5 mm ; et
la formation du circuit de chauffage sur le compact vert poreux et lamellaire par sérigraphie (S23).

4. Le procédé de fabrication du noyau d'atomisation selon la revendication 3, dans lequel l'étape de formation de la préforme de tube externe sur la surface externe de la préforme de tube interne (S13) comprend :
la fabrication de la seconde suspension à partir de matières premières destinées à la formation de la préforme de tube externe (S25) ; et
l'injection de la seconde suspension sur un côté de la préforme de tube interne opposé au circuit de chauffage (S26), dans lequel la surface interne de la préforme de tube externe est en appui contre la surface externe de la préforme de tube interne, et dans lequel l'épaisseur de la préforme de tube externe est comprise entre 0,2 mm et 3,0 mm.

5. Le procédé de fabrication du noyau d'atomisation selon la revendication 3, dans lequel les matières premières pour la formation du compact vert poreux et lamellaire comprennent une première poudre et un premier solvant, la première poudre comprenant une poudre céramique, un premier agent de frittage et un agent de formation de pores, le pourcentage massique du premier agent de frittage étant compris entre 1 % et 40 %, et celui de l'agent de formation de pores étant au plus égal à deux fois la masse totale de la poudre céramique et du premier agent de frittage, le premier solvant comprenant au moins un élément choisi parmi un dispersant, un liant, un plastifiant et un agent de couplage, le pourcentage massique du liant dans le premier solvant étant compris entre 1 % et 40 %.

6. Le procédé de fabrication du noyau d'atomisation selon la revendication 4, dans lequel les matières premières pour la formation de la préforme de tube externe comprennent une deuxième poudre et un deuxième solvant, la deuxième poudre comprenant une poudre céramique, un deuxième agent de frittage et un agent de formation de pores, le pourcentage massique du deuxième agent de frittage étant compris entre 2 % et 40 % de la masse totale de la deuxième poudre, celui de l'agent de formation de pores étant compris entre 5 % et 80 % de la masse totale de la deuxième poudre, le deuxième agent de frittage comprenant un agent de formation de structure, le pourcentage massique de cet agent de formation de structure étant compris entre 5 % et 150 % de la masse totale de la deuxième poudre.

7. Le procédé de fabrication du noyau d'atomisation selon la revendication 4, dans lequel les matières premières pour la formation de la préforme de tube externe comprennent une deuxième poudre et un deuxième solvant, la deuxième poudre comprenant une poudre céramique, un deuxième agent de frittage et un agent de formation de pores, le pourcentage massique du deuxième agent de frittage étant compris entre 2 % et 40 % de la masse totale de la deuxième poudre, celui de l'agent de formation de pores étant compris entre 5 % et 80 % de la masse totale de la deuxième poudre, le deuxième agent de frittage comprenant un monomère organique, le pourcentage massique de ce monomère organique étant compris entre 0,1 % et 20 % de la masse totale de la deuxième poudre.
